# EUROPÄISCHE PATENTSCHRIFT

(11) **EP 2 180 986 B1**
(45) Veröffentlichungstag und Bekanntmachung des Hinweises auf die Patenterteilung: **05.08.2015**
(21) Anmeldenummer: 08717867.9
(22) Anmeldetag: 14.03.2008
(51) Int. Cl.: B28B 23/00, G02B 6/00, E04C 2/04, E04C 1/42, B28B 19/00, B29B 15/12

(54) **VORRICHTUNG UND VERFAHREN ZUR HERSTELLUNG eines lichtleitenden Bauelementes**
DEVICE AND METHOD FOR THE PRODUCTION OF A LIGHT-CONDUCTING COMPONENT
DISPOSITIF ET PROCÉDÉ DE PRODUCTION D'UN ÉLÉMENT STRUCTURAL TRANSMETTANT LA LUMIÈRE

(30) Priorität: 24.08.2007 DE 102007040083
(43) Veröffentlichungstag der Anmeldung: 05.05.2010
(73) Patentinhaber: LUCEM GmbH, 52222 Stolberg (DE)
(72) Erfinder: ROYE, Andreas, 52146 Würselen (DE)
(74) Vertreter: Leske, Thomas
(86) Internationale Anmeldenummer: PCT/EP2008/053128
(87) Internationale Veröffentlichungsnummer: WO 2009/027113

(56) Entgegenhaltungen:
- WO-A-02/32602
- WO-A-2007/096083
- DE-A1-102005 042 235
- DE-U1-202007 000 753
- JP-A- 2006 220 981
- US-A1- 2007 074 484

## Beschreibung

Die vorliegende Erfindung betrifft eine Vorrichtung zur Herstellung eines lichtdurchlässigen Bauelements aus einer Gussmasse, insbesondere Beton, mit einem darin eingegossenen transluzenten Faserverbund als auch ein Verfahren für die Herstellung des lichtdurchlässigen Bauelementes.

Lichtdurchlässige bzw. lichtleitende Bauelemente, insbesondere aus Beton, sind bereits bekannt. Jedoch weisen die bekannten Bauelemente nur eine Richtung auf, durch die Licht durch das Bauelement hindurch treten kann. So ist beispielsweise aus WO 03/097954 A1 ein Baustein bekannt, welcher eingebettete lichtleitende Fasern in einem Gussmaterial aufweist, wobei die lichtleitenden Fasern so angeordnet sind, dass das Licht von einer Seitenfläche auf die gegenüber liegende Seitenfläche des quaderförmigen Bausteins geleitet wird. Die lichtleitenden Fasern sind hierbei, sowohl in vertikaler als auch in horizontaler Richtung, im Wesentlichen parallel zueinander angeordnet.

Weiter zeigt DE 20 2007 000 753 U1 ein lichtdurchlässiges Bauelement mit eingegossenen Lichtleitern, welche beispielsweise mittels einer Endlosware eines Gewebes, eines Gewirkes oder eines Filzes in die Gussmasse eingebracht werden. Dabei wird als Schussfaden des Gewebes ein Lichtleiter verwendet. Daraus ergibt sich, dass auch hier eine Lichtleitung nur in Richtung des eingebrachten Schussfadens (Lichtleiter) möglich ist.

In DE 9310500 U1 werden lichtdurchlässige Bauelemente beschrieben, welche bei der Herstellung von Wänden, Decken oder Böden verwendet werden sollen. Nur mit Lichtleitern, die in Dickenrichtung der Bauelemente angeordnet sind, kann die oben beschriebene Funktion erfüllt werden.

Auch wenn die lichtleitenden Bauelemente aus Beton den Gestaltern von Gebäuden oder Innenarchitekten einen großen gestalterischen Freiraum bieten, so ist das Herstellverfahren solcher Bauelemente bisher noch sehr aufwendig und muss größtenteils durch manuelle Handarbeit erfolgen. Eine Vorrichtung für die industrielle Herstellung eines lichtleitenden Bauelements wurde bisher noch nicht bereitgestellt.

So werden die lichtleitenden Fasern gemäß der WO 03/097954 A1 einzeln schichtweise auf eine Schicht Beton gelegt, worauf eine weitere Schicht Beton gegossen wird und darauf wieder eine Schicht mit Lichtleitern angeordnet wird. Dieses Verfahren wird so lange fortgeführt, bis die gewünschte Bauhöhe eines Gussblocks erreicht ist. Vorzugsweise werden bei diesem Verfahren langgestreckte Betonteile gefertigt, die dann senkrecht zu ihrer Längsrichtung, in welche sich auch die Lichtleiter erstrecken, auf eine gewünschte Länge abgeschnitten werden. Dadurch werden z.B. ziegelsteingroße oder plattenförmige Bauelemente erzeugt, welche in einer Richtung lichtdurchlässig sind.

Gemäß DE 20 2007 000 753 U1 wird ein endloses Textilgewebe, welches auf einer Rolle aufgewickelt ist, schichtweise mäanderförmig in eine Schalungsform eingelegt, wobei auf jede in der Form abgelegte Schicht eine Schicht Gussmasse gegossen wird und diese Schicht Gussmasse wieder mit einer Schicht Textilgewebe bedeckt wird. Auch hier wird das Verfahren so lange wiederholt/fortgeführt, bis eine gewünschte Bauhöhe des Gussblockes erreicht ist. Nach Aushärten der Gussmasse wird der gegossene Block in Scheiben geschnitten werden, welche als flächige Bauelemente eingesetzt werden. Auch bei diesen Bauelementen verläuft die Lichtleitung nur in einer Richtung, nämlich in Dickenrichtung der scheibenförmigen, flächigen Bauelemente.

Da, wie oben aufgezeigt, weder eine Vorrichtung noch ein Verfahren für die maschinelle Serienfertigung von lichtdurchlässigen Bauelementen, insbesondere aus Beton, bekannt sind, sind die gemäß Stand der Technik erzeugten Bauelemente auf Grund ihrer zumindest teilweisen manuellen Fertigung sehr teuer. Zusätzlich kommt es durch das manuelle Einbringen der Gussmasse und/oder der Lichtleiter zu einer inhomogenen Verteilung der Lichtleiter in dem lichtleitenden Bauteil, was ein unschönes Erscheinungsbild, speziell im beleuchteten Zustand des lichtleitenden Bauteils, zur Folge hat. Dieser Effekt wird durch das Eingießen von Beton direkt in die Schalungsform verstärkt, da es dadurch zu einem Verschieben oder gar Aufschwimmen der zuvor eingelegten Lichtleiter kommt.

In der Druckschrift JP 2006 220981 A, wie auch in der Druckschrift US 2007/074484 A1 werden Materialien beschrieben, welche auf eine Weise hergestellt werden, dass sich die lichtleitenden Einlagen bzw. der Faserverbund während der Zugabe der Gussmasse nicht verrutschen. In beiden Fällen werden die lichtleitenden Einlagen bzw. die Faserverbunde in eine Lochmatrix eingespannt und anschließend der gesamte Schalungskörper mit Gussmasse aufgefüllt. Diese fixierte Anordnung der Fasern verhindert eine nicht gewünschte Lagenänderung der Fasern, wobei der Aufwand bis alle Fasern bzw. Lichtleiter richtig in der Lochmatrix eingefügt sind, einen erhöhten Zeitaufwand bedeutet.

Bei der Druckschrift DE 10 2005 042235 A1 handelt es sich um ein ähnliches Prinzip, wie das im Zusammenhang der oben aufgeführten Druckschriften beschrieben wurde. Einziger Unterschied liegt darin; dass es sich bei dem Material, welches zum Auffüllen der Schalungsform verwendet wird, um einen Polymerwerkstoff handelt, der die Eigenschaft aufweist zu quellen und somit die eingespannten Fasern zu umgeben.

Eine weitere Aufgabe der Erfindung ist es, eine Vorrichtung zur Herstellung lichtdurchlässiger Bauelemente bereitzustellen und ein Verfahren anzugeben, wie solche Bauelemente in einer Massenproduktion vorwiegend maschinell hergestellt werden können. Dabei sollen die Vorrichtung und das Verfahren eine homogenere Verteilung der lichtleitenden Faser in der Gussmasse gewähren.

Die Aufgaben werden mit einem Verfahren mit den Merkmalen gemäß Patentanspruch 1, mit einer Vorrichtung gemäß Patentanspruch 4 gelöst. Weitere vorteilhafte Ausgestaltungen gehen aus den jeweiligen abhängigen Unteransprüchen hervor.

Ein lichtdurchlässiges Bauelement aus Gussmasse, insbesondere Beton, kann einen eingegossenen transluzenten Faserverbund aufweisen, wobei der transluzente Faserverbund lichtdurchlässige bzw. lichtleitende Fasern aufweist, die Licht, das auf eine erste Fläche des Bauelements fällt, derart durch das Bauelement leiten, dass das Licht an der der Lichteintrittsfläche gegenüberliegenden Fläche und an mindestens einer weiteren Fläche des Bauelements wieder austritt. Dies bedeutet auch, dass die transluzenten Fasern so in dem Bauelement angeordnet sind, dass sie zumindest mit einer Fläche, welche für den Lichteintritt oder den Lichtaustritt vorgesehen ist, mindestens zwei verschiedene Winkel bilden.

Bei vielen Anwendungen werden quaderförmige Bauelemente als Grundelemente verwendet, was für das Bauelement bedeutet, dass bei Lichteinfall auf eine Seitenfläche der Lichtaustritt sowohl auf der gegenüberliegenden Seite als auch gleichzeitig an den benachbarten Seitenflächen austreten kann. Weiter kann das Licht bei geeigneter Faseranordnung aber auch über die Grundflächen, d.h. die Bodenfläche oder eine obere Deckflächen erfolgen. Bei einem zylindrischen Bauelement, wie beispielsweise einer Säule, kann das Licht auf einer Seite der Säule, z.B. auf einer Hälfte der Mantelfläche der Säule in das lichtdurchlässige Bauelement eintreten und auf der anderen Hälfte der Mantelfläche sowie an den oberen und/oder unteren Deckflächen der Säule austreten. Das Bauelement ist jedoch nicht auf geometrische Regelkörper, wie Quader oder Zylinder beschränkt, sondern es lassen sich beliebige räumliche Formen mit beliebigen Querschnitten ausbilden. Zur Vereinfachung der Beschreibung der Erfindung wird im Weiteren auf ein quaderförmiges Bauelement Bezug genommen, jedoch gelten die genannten Merkmale analog für alle anderen gestaltbaren Bauformen des Bauelements.

In dem lichtdurchlässigen Bauelement wird ein Faserverbund bzw. Fasergeflecht in eine Gussmasse, welche beispielsweise Beton oder Feinbeton sein kann, eingegossen, wobei der Faserverbund transluzente Fasern aufweist. Diese transluzenten Fasern sind Monofilamente, worunter auch Stäbe fallen, oder Multifilamente aus lichtdurchlässigen (transparenten) Materialien. Des Weiteren umfasst der Begriff transluzente Fasern/Stäbe auch Lichtleiter oder Lichtwellenleiter. Für die Lichtleitung, welche in lichtdurchlässigen Bauelementen im Wesentlichen ein Weiterleiten sichtbaren Lichtes ist, ist es insbesondere bei kürzeren Distanzen nicht notwendig, technisch hochwertige Lichtleiter einzusetzen, die sonst beispielsweise zur Übertragung von Daten verwendet werden. Bei lichtdurchlässigen Bauelementen reicht es aus, Fasern zu verwenden, die lichtdurchlässig sind und an die keine hochtechnischen Anforderungen bezüglich der Qualität des übertragenen Lichts gestellt werden. Selbstverständlich können zur Lichtleitung in den Bauelementen aber auch hochtechnische Lichtleiter verwendet werden, falls z.B. die Abmessungen, in Längsrichtung einer Säule, sehr hoch sind und/oder an den Deckflächen eine gesteigerte Lichtausbeute im Vergleich zu einer Lichtübertragung in einer anderen Richtung gewünscht wird, oder beispielsweise ein Muster erzeugt werden soll, welches aus Helligkeitsunterschieden der verschiedenen Farben bestehen soll.

Bei dem lichtdurchlässigen Bauelement wird ein Faserverbund verwendet, welches beispielsweise durch Weben, Wirken, Stricken, Flechten, Verdrillen oder jedes andere Herstellungsverfahren für das Verbinden von Fasern zu einem Verbund hergestellt wird. Der Begriff "Faserverbund" soll hier als Oberbegriff für beliebige Faseranordnungen verwendet werden.

Der in dem lichtdurchlässigen Bauelement verwendete Faserverbund kann sowohl ein zweidimensionaler, d.h. ein im Wesentlichen flächiger Faserverbund sein oder kann als dreidimensionaler Faserverbund ausgebildet sein. Wie oben schon angedeutet, ist es für die Lichtleitung/Lichtdurchlässigkeit in einem Bauelement nicht unbedingt erforderlich, dass alle Fasern eines Faserverbundes, der in eine Gussmasse eingegossen werden soll, aus transluzenten Fasern besteht. Für die Lichtdurchlässigkeit ist es ausreichend, wenn beispielweise für die Armierung, das heißt für die Verstärkung, vorgesehene textile Gewebe, welche ebenfalls einen Faserverbund darstellen, zumindest teilweise aus transluzenten Fasern hergestellt werden. Weiterhin ist es ebenfalls denkbar, dass solche für die Armierung eines Bauelements vorgesehenen Gewebe mit transluzenten Fasern versehen werden, um zusätzlich zu der Verstärkung dem Bauelement auch noch die Eigenschaft der Lichtdurchlässigkeit zu geben.

Wie aus dem oben Genannten hervorgeht, können für das lichtdurchlässige Bauelement alle bekannten Arten eines Faserverbundes verwendet werden, wobei die transluzenten Fasern entweder selbst Bestandteil des Faserverbundes sind oder an einen solchen Faserverbund angebracht werden. Dabei ist es wichtig, die transluzenten Fasern, welche an oder in dem Faserverbund angeordnet sind, in verschiedene Richtungen anzuordnen, damit Licht, welches beispielsweise nur von einer Seite auf das Bauelement fällt, in verschiedene Richtungen gelenkt werden kann. Somit ist es möglich, dass das auf das Bauelement einfallende Licht, wie z.B. Sonnenlicht, an mehreren Flächen, welche nicht zwingend parallel zur Lichteintrittsfläche sein müssen, wieder austritt. Es kann aber auch Licht an mehreren Flächen in das Bauelement eintreten und nur an einer oder mehreren Flächen wieder austreten.

Bei den im Stand der Technik bekannten Bauelementen tritt das Licht an einer Fläche in das Bauelement ein und tritt an einer gegenüberliegenden zumeist parallelen Fläche aus diesem Bauelement wieder aus. Dies erklärt sich dadurch, dass die lichtführenden Fasern in den in den lichtleitenden Bauten gemäß des Standes der Technik in Lichteinfallsrichtung, d.h. eindimensional, in dem lichtleitenden Bauelement angeordnet sind. Abweichend davon sind die transluzenten Fasern des lichtdurchlässigen Bauelements in mehreren unterschiedlichen Richtungen, d.h. mehrdimensional, in dem lichtdurchlässigen Bauelement angeordnet.

Wie oben bereits beschrieben, sind sämtliche zweidimensionale und dreidimensionale Fasernverbunde anwendbar. Bei dreidimensionalen Faserverbunden, wie sie beispielsweise durch ein Abstandswirken hergestellt werden können, kann Licht von dem lichtdurchlässigen Bauelement in alle räumlichen Richtungen gelenkt werden. Zusätzlich zur Lichtleitung können zur Festigkeits-/Stabilitätssteigerung - der Bauelemente auch belastungsgerechte Bewehrungselemente wie z.B. Stahl, alkaliresistente Textilien etc. eingebracht werden.

Mit dieser mehrdimensionalen Anordnung der lichtleitenden Fasern können aber auch andere Effekte erzielt werden, wie z.B. Bündeln von Licht, welches auf verschiedene Flächen oder eine gewölbte Fläche des Bauelements fällt wird durch eine Fläche ausgekoppelt. Oder es kann Licht unterschiedlicher Wellenlänge, welches an unterschiedlicher Fläche eingekoppelt wird, an unterschiedlicher Fläche oder nur einer Fläche ausgekoppelt werden.

Wie eingangs bereits aufgezeigt, werden bisher lichtdurchlässige Bauelemente mit viel Handarbeit, d.h. mit einem geringen Grad an Automatisierung, hergestellt, was mit verhältnismäßig hohen Kosten für die Herstellung verbunden ist. Das lichtdurchlässige Bauelement wird in einer Vorrichtung hergestellt, welche den verwendeten Faserverbund zunächst mit Gussmasse beschichtet, und den mit Gussmasse beschichteten Faserverbund in eine Form, beispielsweise eine Schalung, ablegt, damit die Gussmasse darin aushärten kann. Wird ein im Wesentlichen flächig ausgebildeter Faserverbund verwendet, so erfolgt die Ablage des mit Gussmasse ummantelten Faserverbundes in die Form schichtweise. Für die Bildung der Schichten aus Gussmasse und Faserverbund in der zur Aushärtung vorgesehenen Form wird der Faserverbund endlos beispielsweise aufgewickelt auf einer Rolle der Vorrichtung zum Beschichten des Faserverbundes zugeführt. Bei einer endlosen Zuführung des Faserverbundes erfolgt die Ablage des mit Gussmasse ummantelten Faserverbundes mäanderförmig, d.h. eine Schicht wird auf der darunterliegenden Schicht dadurch abgelegt, dass der mit Gussmasse beschichtete Faserverbund durch eine oszillierende Bewegung schichtweise abgelegt wird.

Bei der erfindungsgemäßen Vorrichtung zur Herstellung des lichtdurchlässigen Bauelements wird zunächst der Faserverbund durch eine erste Fördereinrichtung einer Beschichtungsvorrichtung zugeführt, die Gussmasse auf den Faserverbund aufbringt. In der Beschichtungsvorrichtung wird der Faserverbund beidseitig von der Gussmasse ummantelt. Eine anschließende Fördereinrichtung fördert den mit Gussmasse beschichteten Faserverbund aus der Beschichtungsvorrichtung heraus und leitet diesen einer Schalungsform zu, in der der beschichtete Faserverbund schichtweise abgelegt wird. Nach Befüllen der Form bis zur gewünschten Füllhöhe, d.h. bis die gewünschte Abmessung eines Gussblockes erreicht ist, kann die Gussmasse des Gussblockes in dieser Form aushärten. Die ausgehärteten Blöcke der Gussmasse enthalten eine Anzahl von Lagen eines Faserverbundes mit transluzenten Fasern/Stäben. Die lichtdurchlässigen Bauelemente als Endprodukt werden aus den hergestellten Gussblöcken derart erzeugt, dass diese in Platten mit verschiedenen Dicken geschnitten werden. Die Schnittrichtung wird dabei durch die Anordndung der transluzenten Fasern vorgegeben, auf weiche ein Hauptaugenmerk gerichtet wird. Soll beispielsweise die Hauptlichtübertragungsrichtung in Richtung der Schussfäden eines gewebten Textils erfolgen, so ist die Schnittrichtung des Gussblockes senkrecht zu den Schussfäden.

Je nach Größe und Form sind auch andere Schnittrichtungen möglich, nach Zuschneiden des Gussblockes in Bauelemente der gewünschten Größe müssen sämtliche Außenflächen nachbehandelt werden, damit.eventuelle Ablagerungen an den gewünschten Lichteintrittsflächen und Lichtaustrittsflächen von den Oberflächen der lichtdurchlässigen Fasern entfernt werden. Nicht notwendigerweise können die die Lichteintrittsflächen oder -austrittsflächen der Lichtleiter aus dem Gussblock herausgeschnittenen lichtdurchlässigen Bauelemente von überschüssiger Gussmasse durch Abfräsen oder Polieren freigelegt werden. Vorteilhafterweise werden die so freigelegten Flächen der transluzenten Fasern durch eine lichtdurchlässige Schicht, wie beispielsweise Epoxidharz, vor Umwelteinflüssen geschützt.

Bei endlos der erfindungsgemäßen Vorrichtung zugeführten Faserverbund erfolgt auch das Herausfördern des mit Gussmasse beschichteten Faserverbundes aus der Beschichtungsvorrichtung in kontinuierlicher Art und Weise, so dass die Ablage desselben in eine Aushärteform mäanderförmig vollzogen wird. Für eine mäanderförmige Ablage des mit Gussmasse durchdrängten Faserverbundes (Schalung) findet eine Relativbewegung zwischen der Fördereinrichtung und Schalungsform statt, welche so gesteuert ist, dass der von der Gussmasse benetzte Faserverbund schlangenförmig (mäanderförmig) in der Aushärteform zum Liegen kommt. Dies kann einerseits durch eine oszillierende Linearbewegung der Fördervorrichtung bei stillstehender Schalung erfolgen, oder aber auch durch eine oszillierende Linearbewegung der Aushärteform, bei relativ zu der Form linear stillstehender Fördervorrichtung des benetzten Faserverbundes. Denkbar ist ebenfalls eine Linearbewegung der vollständigen Vorrichtung zur Benetzung des Faserverbundes zusammen mit den Fördereinrichtungen bzgl. der Aushärteform.

Werden in der Beschichtungsvorrichtung vorgefertigte, z. B. zugeschnittene, Faserverbundmatten mit Gussmasse beschichtet, ist eine oszillierende Linearbewegung zwischen Benetzungsvorrichtung und Aushärteform nicht zwingend erforderlich, sondern die einzelnen Faserverbundmatten können beispielsweise auf einem Transportband abgelegt werden und von dort eventuell auch manuell in eine Aushärteform eingelegt werden. Dies kann wiederum automatisch durch entsprechend gesteuerte Bewegungen zwischen Förderband und Aushärteform erfolgen, sodass die mit Gussmasse ummantelten Faserverbundmatten schichtweise in der Schalung zum Liegen kommen.

Einzelne mit Gussmasse beschichtete oder trockene Faserverbundmatten können auch manuell oder maschinell übereinander in die Schalungsform abgelegt werden. Dabei können trockene Faserverbundmatten in einen Rahmen eingespannt werden und die Rahmen übereinander gelegt und miteinander verbunden werden, wobei vor dem Anbringen des nächsten Rahmens auf einen vorherigen Rahmen oder die Grundplatte der vorherige Faserverbund oder die Grundplatte mit Gussmasse beschichtet wird. Durch Verbinden der Rahmen in vertikaler Richtung wird eine Form (Schalung) ausgebildet, in der ein Gussblock aushärten kann. Wie auch bei dem vorher beschriebenen mäanderförmigen Ablegen eines endlosen Faserverbundes in die Schalung, wird auch hier nach Aushärten - zumindest bis zur Formstabilität- der Gussblock durch Zuschneiden, Abfräsen, Polieren und/oder Beschichten nachbearbeitet.

Für die Herstellung des Bauelements mit der erfindungsgemäßen Vorrichtung wurde, wie oben beschrieben, ein Verfahren aufgezeigt, wie solche lichtdurchlässigen Bauelemente voll automatisch und maschinell unter Vermeidung großer manueller Arbeiten hergestellt werden können. Bei dem erfindungsgemäßen Verfahren wird der mit lichtdurchlässigen Fasern versehene Faserverbund allseitig, bei flächig gestalteten Faserverbunden im Wesentlichen an der Ober- und an der Unterseite, mit Gussmasse beschichtet. Als nächstes wird der so beschichtete Faserverbund mittels einer zweiten Fördereinrichtung aus der Beschichtungseinrichtung herausgefördert und einer Form zugeführt, in der beschichteter Faserverbund schichtweise bzw. mäanderförmig zum Aushärten der Gussmasse abgelegt wird. Die Zufuhr des beschichteten Faserverbundes erfolgt derart, dass überschüssige Gussmasse nicht in die Schalung/Form tropft oder fällt. Da bei der Beschichtung bzw. Benetzung des Fasergewebes eventuell am Faserverbund nicht ausreichend fest anhaftende Gussmasse von dieser wieder herabfällt und bei Hineinfallen in die Aushärtform zu Unregelmäßigkeiten zwischen den einzelnen Schichten führen würde, ist es wichtig, die herabtropfende Gussmasse so aufzufangen, dass diese nicht in die Aushärteform (Schalung) gelangt. Dies kann beispielsweise mit einer geeigneten Abstreifvorrichtung (Rakelmesser) an der Fördereinrichtung erfolgen, die den beschichteten Faserverbund aus der Beschichtungsvorrichtung mit Gussmasse herausfördert.

Gemäß dem erfindungsgemäßen Verfahren wird der Textilverbund in einer Beschichtungsvorrichtung beschichtet. Dies kann beispielsweise durch Hindurchführen bzw. Eintauchen des Faserverbundes in einen Behälter erfolgen oder aber auch durch andere bekannte Beschichtungsformen. Hierbei sind vor allem das Laminieren, Aufsprühen, Imprägnieren, Platschen, Tränken, etc. zu nennen. All diese Verfahren sind dem Fachmann bei dem Stichwort Beschichten eines Faserverbundes bereits bekannt und sollen hier nicht weiter ausgeführt werden. Wichtig für das erfindungsgemäße Verfahren ist nur, dass der Textilverbund vor dem Ablegen in die Aushärteform von der Gussmasse möglichst gleichmäßig benetzt wird. Eventuell von dem benetzten Faserverbund heruntertropfende Gussmasse sollte dabei, auch bei seiner weiteren Transportierung, nicht in die Aushärteform fallen, sondern so aufgefangen werden, sodass diese der Beschichtungsvorrichtung wieder zugeführt wird. Somit wird ein homogener schichtweiser bzw. mäanderförmiger Aufbau des Gussblockes möglich.

Durch die Herstellung des lichtdurchlässigen Betonelements nach dem erfindungsgemäßen Verfahren wird die Homogenität, d.h. die Verteilung zwischen lichtdurchlässigen Fasern und Gussmasse einheitlicher, was sich am Endprodukt durch eine gleichmäßigere Faserverteilung zeigt, welche eine gleichmäßige Lichtabstrahlung bedingt. Durch die Anwendung des erfindungsgemäßen Verfahrens speziell durch Vermeidung von Hineinfallen nicht an den Faserverbund ausreichend gebundener Gussmasse in die Schalung werden Unregelmäßigkeiten, welche speziell in den lichtleitenden Betonelementen des Standes der Technik zu sehen sind, großteils vermieden.

Vorteilhafterweise kann das erfindungsgemäße Verfahren so ausgestaltet werden, dass zur Beschichtung des Textilverbundes (Faserverbund) während der Durchführung des Faserverbundes durch einen Behälter erzeugt wird. Bei der Beschichtung des Faserverbundes ist es nicht entscheidend, wann die zur Beschichtung notwendige Gussmasse erzeugt wird, sondern, speziell bei der Verarbeitung eines endlosen Textilverbundes, dieser kontinuierlich mit der Gussmasse in der gewünschten Schichtdicke beschichtet wird. Die Gussmasse kann dabei bedarfsgerecht angefertigt werden.

Bezüglich der Anfertigung der Gussmasse sei angemerkt, dass durch die Einstellung der Viskosität der Gussmasse, durch die Parameter des Textils (Durchmesser, Abstand und Art der transluzenten Fasern/Stäben, Textilbindung, etc.) und durch die Verfahrensparameter bei der Beschichtung (Transportgeschwindigkeit, Füllstandshöhe, etc.) der Abstand der einzelnen Lagen der transluzenten Fasern/Stäbe in den erfindungsgemäßen lichtdurchlässigen Bauelementen gezielt variabel eingestellt werden kann. Dabei ist zu beachten, dass je flüssiger (niedrigviskoser) die mineralische Gussmasse beim Einlegen in die Schale ist, desto mehr kommt es zu einem leichten Verschwimmen der Lagen, was je nach Gestaltungswunsch aber auch gewollt sein kann.

Je nach angewandtem-Beschichtungsverfahren wird die zu wählende Viskosität der Gussmasse unterschiedlich sein, wobei diese beispielsweise durch Zufügen von Kurzfasern eingestellt werden kann. Die Wahl der Viskosität sollte jedoch so erfolgen, dass das Ablegen des Textils in der Schalung mit einem definierten Lagerabstand zwischen den lichtleitenden Fasern/Stäben erfolgt. Das Ablegen erfolgt mänderförmig entweder durch eine alternierende Bewegung des Beschichtungsaggregats, z.B. auf Gleitschienen über der Schalung oder durch eine alternierende Bewegung der Schalung, z.B. auf Gleitschienen. Hierbei ist auch der Einsatz einer Changiervorrichtung möglich, welche die Haftung der Gussmasse am Textil möglichst nicht negativ beeinflussen sollte.

Durch das erfindungsgemäße Verfahren wird ein abwechselndes Einlegen und Vergießen des Faserverbundes mit Gussmasse in einer Schalung vermieden und das Textil/der Faserverbund kontinuierlich mit daran anhaftender Gussmasse transportiert und schließlich gleichzeitig mit der Gussmasse in die Schalung abgelegt.

Zu dem Schritt des Ablegens in die Schalungsform sei angemerkt, dass die Aushärtung der Gussmasse üblicherweise erst dann erfolgt, wenn die Textillagen in der Schalung abgelegt sind. Gegebenenfalls kann aber auch ein vorheriges Ansteifen oder Antrocknen der Gussmasse am Textilverbund erfolgen bzw. künstlich herbeigeführt werden, um z.B. das Verschwimmen der Textillagen nach dem Ablegen in der Schalung weiter zu verhindern.

Wird die Beschichtung mit einer sehr hohen Viskosität der Grundmasse und einer hohen Grünstandfestigkeit der Gussmasse durchgeführt, kann, insbesondere nach einer möglichen Vakuum- oder thermischen Behandlung des beschichteten Faserverbundes das Ablegen der beschichteten Textillagen auf einem Tisch oder Förderband auch ohne den Einsatz einer Schalung erfolgen. Das bedeutet, dass das Aushärten der Gussmasse nicht notwendigerweise in einer Schalung zu erfolgen hat.

Nach dem Aushärten der Gussmasse, in der der Faserverbund fest eingegossen ist, können die einzelnen Flächen, wie Lichteintrittsflächen oder Lichtsaustrittsflächen für eine Optimierung der Lichtübertragung durch Schneiden, Abfräsen, Schleifen oder Ähnliches auf die gewünschte Größe gebracht werden. Vorzugsweise wird man die Form zum Aushärten der Gussmasse so groß wählen, dass man durch Zuschnitt des ausgeformten und ausgehärteten Gussblockes mehrere bzw. eine Vielzahl lichtdurchlässige Bauelemente gemäß der Erfindung erhält. Selbstverständlich ist jedoch eine Einzelfertigung der Bauelemente ebenfalls möglich. Dazu benötigt man für jedes Bauelement eine separate Schalung (Aushärteform), wenn eine hochviskose Gussmasse nicht verwendet werden kann.

Wird das Bauelement mittels eines bandförmigen endlosen Textilverbundes hergestellt, wobei der beschichtete Textilverbund mäanderförmig in die Aushärteform abgelegt wird, so sind die Bereiche des ausgehärteten Gussblockes abzutrennen, in welchen der Textilverbund umgelenkt wurde, um die mäanderförmige Ablage zu erreichen. Dies ist notwendig, da über die Umleitung der Textilverbundbahn um im Wesentlichen 180 Grad bei der mäanderförmigen Ablage kein Licht aus den umgelenkten Fasern in Schichtrichtung austreten kann. Das Zuschneiden des ausgehärteten Gussblocks senkrecht zur Schichtrichtung des beschichteten Faserverbundbandes ist also deshalb notwendig, damit die transluzenten Fasern mit einer Querschnittsfläche an die Oberfläche des lichtdurchlässigen Bauelements treten können. Ein derartiges Freimachen der lichtdurchlässigen/lichtleitenden Fasern bzw. deren Oberflächen ist auch an allen anderen Seiten des Gussblockes notwendig, damit gewährleistet ist, dass alle transluzenten Fasern des Faserverbundes mit einer Querschnittsfläche an einer Oberfläche des lichtdurchlässigen Bauelements erscheinen.

Bei den hier beschriebenen Zuschnitten, welche auch durch ein Abfräsen oder Abschleifen erzeugt werden können, wird man die Bearbeitungsrichtung bevorzugt senkrecht zur Faserrichtung wählen, um eine möglichst gute Lichtaustrittsfläche bzw. Lichteintrittsfläche zu schaffen. Allerdings kann die Bearbeitungsrichtung auch schräg zur Faserrichtung, d.h. zur Längsrichtung der Faser, erfolgen, wodurch die Querschnittsfläche die an die Oberfläche des lichtdurchlässigen Bauelements tritt, vergrößert wird. Jedoch sollte hierbei der Grenzwinkel für die Einkopplung von Licht beachtet werden.

Die einzelnen Schritte des vorstehend geschilderten Verfahrens können dabei teilweise gleichzeitig erfolgen und/oder es können weitere Prozessschritte zusätzlich durchgeführt werden. Das hier geschilderte Verfahren arbeitet kontinuierlich. Es ist jedoch auch möglich, dass die beschichtete Faserverbundbahn nach dem Benetzen mit Gussmaterial durchtrennt wird und die einzelnen Abschnitte auf ein Förderband oder eine andere Transportvorrichtung abgelegt werden, um dann diskontinuierlich in Abschnitten in eine Schalung eingelegt zu werden.

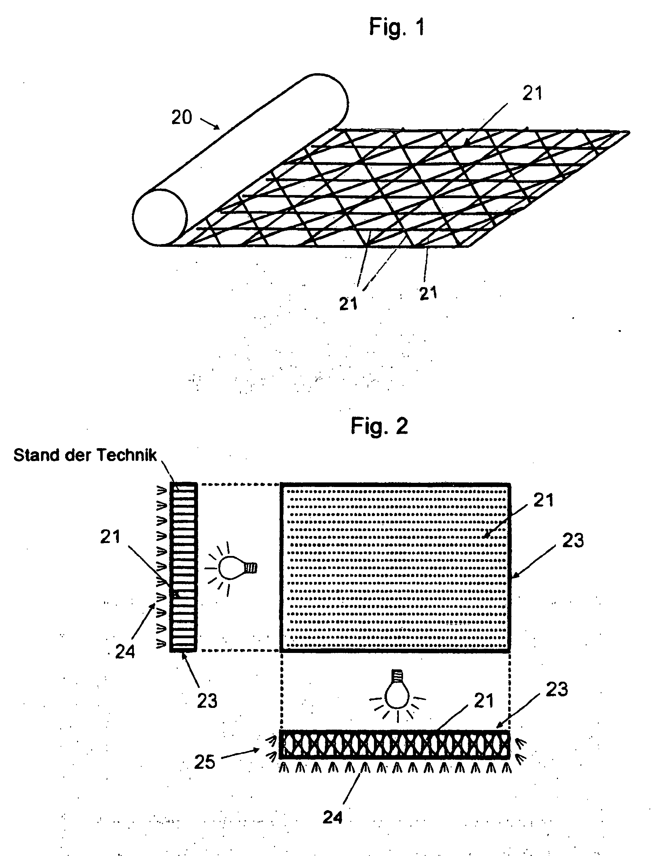

Das lichtdurchlässige Bauelement, die erfindungsgemäße Vorrichtung zum Herstellen des lichtdurchlässigen Bauelements sowie das Verfahren hierfür werden anhand der folgenden Figuren näher erläutert. Die Figuren 1-7 zeigen vorteilhafte Ausführungsvarianten der Erfindung, worauf diese jedoch nicht beschränkt ist. Es zeigen schematisch:
- Figur 1:: schematisch einen flächigen Abschnitt eines aufgerollten endlosen Textilverbundes mit lichtdurchlässigen Fasern in Längsrichtung, in Querrichtung und in diagonaler Richtung Faserverbundes,
- Figur 2:: schematisch ein lichtdurchlässiges Bauelement, in welchem ein Faserverbund gemäß Figur 1 eingegossen ist, und Möglichkeiten für den Lichtaustritt,
- Figur 3:: schematisch einen Abschnitt eines 3D-Faserverbundes mit lichtleitenden Fasern
- Figur 4:: schematisch ein lichtdurchlässiges Bauelement, in welchem ein Faserverbund gemäß Figur 3 eingegossen ist,
- Figur 5:: schematisch eine erfindungsgemäße Vorrichtung zur Herstellung des erfindungsgemäßen lichtdurchlässigen Bauelements,
- Figur 6:: schematisch eine weitere Ausführungsform der Vorrichtung gemäß Figur 5.
- Figur 7 a- c:: Weitere Möglichkeiten der Beschichtung des Faserverbundes innerhalb der erfindungsgemäßen Vorrichtung zur Herstellung des lichtdurchlässigen Bauelements.

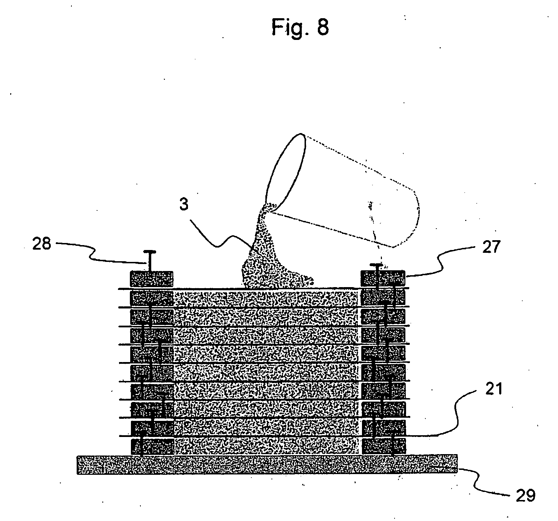

- Figur 8:: schematisch den Aufbau eines Gussblocks durch in Rahmen eingespannte Faserverbundmatten.

Figur 1 zeigt einen auf eine Rolle aufgerollten Faserverbund 20 mit längs, quer und schräg zum Faserverbundband 9 laufenden lichtdurchlässigen Fasern 21. Wird ein solcher Textilverbund mit Fasern längs, quer und schräg zur Längsrichtung des Fasertextilbandes in Gussmasse eingegossen, so kann eine Lichtabstrahlung, wie in Figur 2 unten dargestellt auch über Seitenflächen erfolgen, die nicht der Lichteintrittsfläche gegenüberliegen. In Figur 2 links ist eine Lichtdurchleitung dargestellt, wie sie bei Bauelementen gemäß dem Stand der Technik erreicht wird.

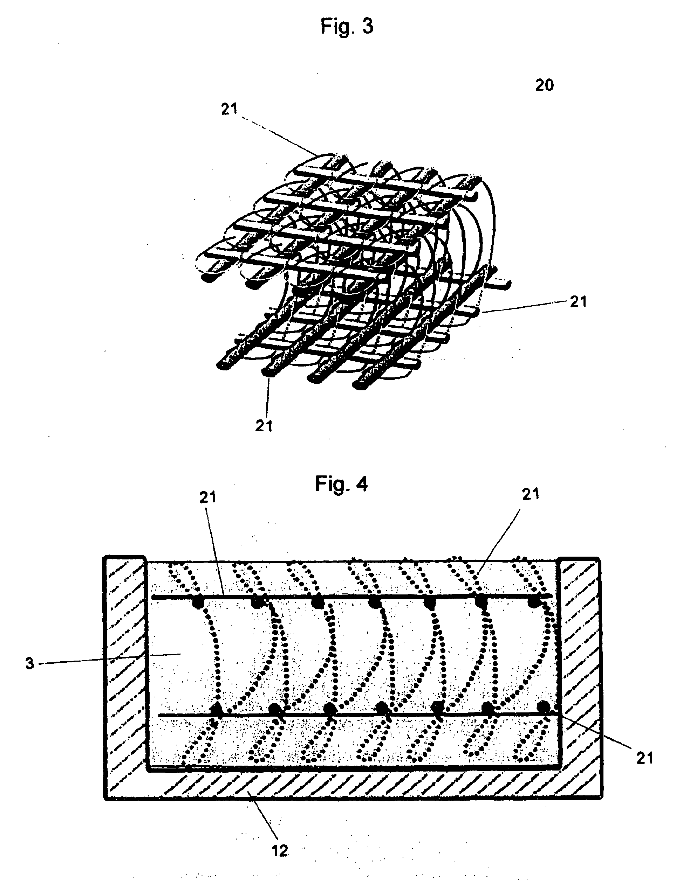

Wie mit den Figuren 3 und 4 anschaulich erläutert, können auch dreidimensionale Textilverbunde mit lichtdurchlässigen Fasern verwendet werden, wodurch eine Lichtleitung in sämtliche Raumrichtungen erreicht wird. In Figur 3 ist exemplarisch und schematisch ein derartiger Faserverbund 20 dargestellt, so wie er in dem erfindungsgemäßen Verfahren zur Herstellung des erfindungsgemäßen lichtdurchlässigen Bauelements in Gussmasse eingegossen wird. Wie deutlich in der Figur zu erkennen ist, können die lichtdurchlässigen Fasern sowohl längs, quer als auch in Höhenrichtung angeordnet sein. Eine Überlagerung mit einem Faserverbund gemäß Figur 1 ist zudem möglich. In Figur 4 ist ein in Gussmasse eingegossener dreidimensionaler Faserverbund in einer Schalung 12 dargestellt. Der hier verwendete Faserverbund 20 wird beispielsweise durch Abstandswirken erzeugt, wobei die außerhalb der Bewehrung gebildeten Maschen vor Vergießen des dreidimensionalen Faserverbundes aufgerichtet werden müssen, damit nach Aushärten des Gussblockes ein Abfräsen dieser Maschen möglich ist und somit eine Querschnittsfläche der lichtdurchlässigen Fasern, mit welchen diese Maschen gebildet wurden, an eine Oberfläche des Bauelements treten können. Sowohl die Bewehrung in Längsrichtung des Textilverbundes (0°-Bewehrung) als auch die Bewehrung quer zur Längsrichtung des Textilverbundes (90°-Bewehrung) und auch die Maschenbildung kann durch lichtdurchlässige Fasern erfolgen. Dabei sind unterschiedliche Faserstärken verwendbar, so wie dies beispielhaft in Figur 3 angedeutet ist.

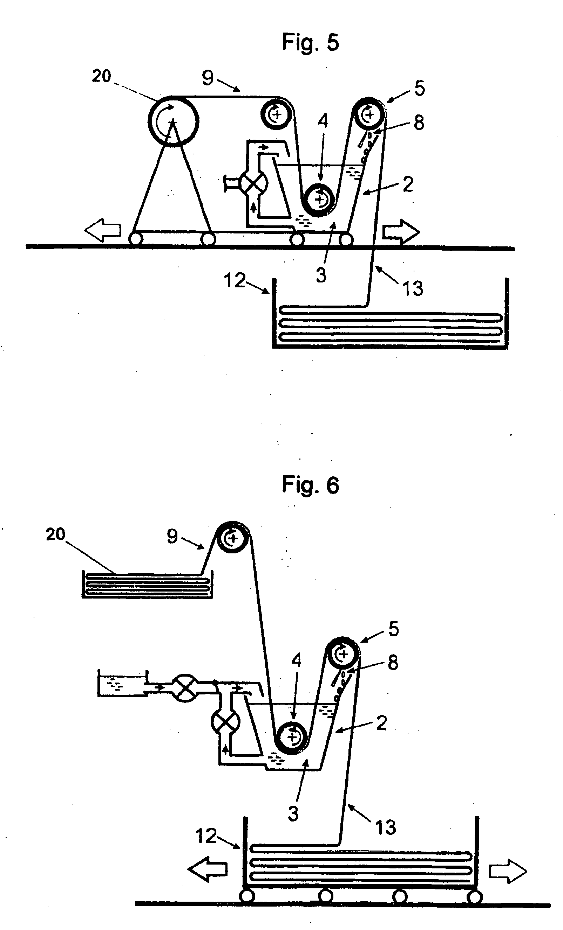

Eine Vorrichtung zur Herstellung eines lichtdurchlässigen Bauelements ist in den Figuren 5 und 6 dargestellt. Dabei wird ein bandförmiger unbeschichteter Faserverbund 20 auf einer Rolle 1 von einer ersten Fördereinrichtung 9 einem Behälter 2 zugeführt, in dem sich die Gussmasse 3 befindet. Eine Umlenkwalze 4, welche sich innerhalb des Behälters 2 mit Gussmasse 3 befindet, fördert den Faserverbund durch die Gussmasse 2, wodurch dieser im Tauchverfahren mit Gussmasse 2 beschichtet wird. Eine weitere Fördereinrichtung 5 befördert den beschichteten Faserverbund 13 nach oben aus dem Behälter 2 heraus und führt diesen einer Schalung 12 zu. Der beschichtete Faserverbund 13 wird durch eine lineare Hin- und Herbewegung der Beschichtungsvorrichtung längs oder quer zur Schalung, mäanderförmig in die Schalung 12 abgelegt. Die Beschichtungsvorrichtung weist an der Fördereinrichtung 5 eine Abstreifvorrichtung 8 für überschüssige an der Förderwalze 5 anhaftende Gussmasse auf, welche durch die Abstreifvorrichtung wieder in den Behälters 2 geleitet wird.

In Figur 6 ist eine weitere Ausführungsform für die Herstellung eines lichtdurchlässigen Bauelements dargestellt, wobei gleiche Teile mit gleichen Bezugszeichen versehen sind. Anders als im Ausführungsbeispiel gemäß Figur 5 wird der unbeschichtete Textilverbund 21 aus einer abgetafelten Ablage 1 durch die erste Fördereinrichtung 9 dem Behälter 2 zugeführt, in welchem sich die Gussmasse 3 befindet. Die Fördereinrichtung 4 fördert den Textilverbund durch die Gussmasse 2 hindurch und leitet den beschichteten Textilverbund 13 der Fördereinrichtung 5 zu, welche den beschichteten Textilverbund der Schalung 12 zuführt, wobei die Abstreifvorrichtung 8 überschüssige Gussmasse wieder in den Behälter 2 zurückleitet. Anders als im Ausführungsbeispiel gemäß Figur 5 wird bei diesem Ausführungsbeispiel für die Vorrichtung zur Herstellung lichtdurchlässigen Bauelements die Schalung durch eine Hin- und Herbewegung in Längsrichtung des Faserverbundbandes bewegt. Die Ablage in Schalung 12 erfolgt hierdurch mäanderförmig, wobei der mit Gussmasse benetzte Textilverbund 13 schicht- bzw. lagenweise übereinander in der Schalung 12 zu liegen kommt und die Gussmasse 3 in der Schalung aushärten kann.

Wie aus den Figuren 5 und 6 ersichtlich, müssen die Umlenkstellen, welche durch die mäanderförmige Ablage des beschichteten Textilgewebebandes 13 mit lichtdurchlässigen Fasern erzeugt wurden, nach Aushärten des Gussmaterials abgeschnitten werden, damit eine Lichtleitung in Längsrichtung des Textilbandes 20 möglich ist. Für lichtdurchlässige Fasern quer/schräg zur Längsrichtung des Textilverbundes ist es vorteilhaft, auch die Seitenflächen parallel zur Längsrichtung zu fräsen bzw. zu polieren, um einen möglichst guten Lichtein- oder -austritt zu ermöglichen. Gegebenenfalls sollten alle Außenflächen des lichtdurchlässigen Bauelements mit einer transparenten Schicht vor Beschädigungen geschützt werden.

In den Figuren 5 und 6 wird endloses Faserverbundmaterial durch einen Behälter mit Gussmasse geleitet und dadurch beidseitig mit Gussmasse benetzt. Das gleiche Verfahren kann jedoch auch für Faserverbundmatten mit endlichen Abmessungen erfolgen, wobei eine Einzelzuführung, ähnlich beispielsweise einer Einzelblattzuführung eines Kopierapparates oder Druckers, vorstellbar ist.

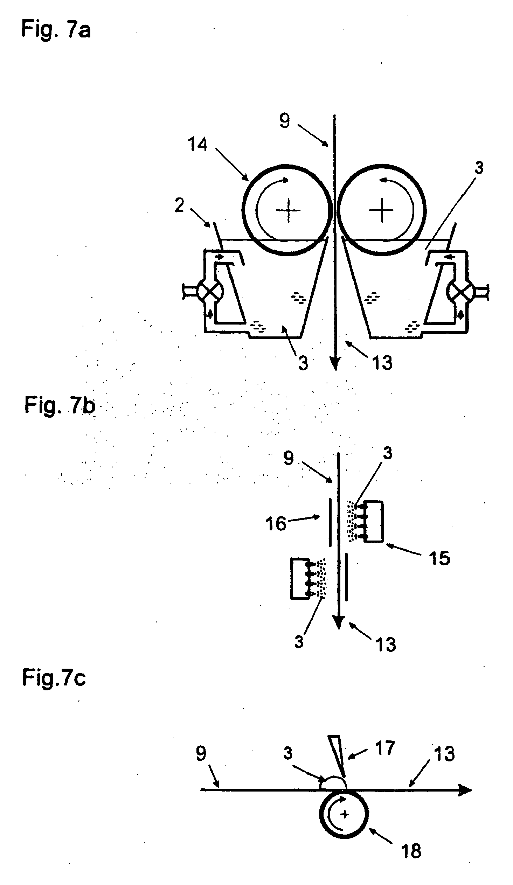

Die Figuren 7a) - 7c) zeigen weitere Möglichkeiten der Beschichtung des Textilverbundes 20 mit Gussmasse. In Figur 7 a) ist der Vorgang des sogenannten Pflatschens dargestellt, wobei zwei sich gegeneinander drehende Walzen 14 zumindest teilweise in Gussmasse 3 eintauchen und Gussmasse auf ihren Umfangsflächen aufnehmen. Zwischen den beiden beabstandeten Pflatschwalzen 14 wird der Textilverbund 10 mittels der Förderwalzen 5 und 9 (nicht dargestellt) weitergeführt und gleichzeitig von den beiden Walzen 14 mit Gussmasse 3 beschichtet.

In 7b) wird das in dem Behälter 2 geförderte Faserband 20 durch Spritzen mit Gussmaterial 3 benetzt, wobei es vorteilhaft ist, die beiden Seiten des Faserbandes 9 nacheinander zu benetzen und jeweils den Spritzdüsen 15 gegenüberliegend hinter dem Faserband 9 liegenden Bereichen ein Prallblech 16 anzuordnen. Die weitere Führung bzw. Förderung des benetzten Faserbandes 13 kann dann wieder durch die Fördereinrichtung 5, wie in Figur 5 und 6 dargestellt ist, erfolgen.

In Figur 7c) wird der Faserverbund 20 durch Transportwalze 18 innerhalb des Behälters 2 (vgl. Figur 6 und 7) gefördert und einseitig durch Gussmasse mittels eines Rackelmessers 17 kontinuierlich mit Gussmasse 3 beschichtet. Der einseitig mit Gussmasse 3 beschichtete Faserverbund 13 wird dann wiederum an die Fördereinrichtung 5 weitergeleitet und beispielsweise mäanderförmig in die Schalung 12 abgelegt.

### Bezugszeichenliste

- 2: Behälter
- 3: Gussmasse
- 4: Umlenkwalze
- 5: Förderwalze
- 8: Abstreifvorrichtung
- 9: unbeschichteter Faserverbund
- 10: Beschichtungsvorrichtung
- 12: Schalung
- 13: beschichteter Faserverbund
- 14: Pflatschwalze
- 15: Spritzvorrichtung
- 16: Prallschutz
- 17: Rakelmesser
- 18: Transportwalze
- 20: aufgerollter Faserverbund
- 21: lichtdurchlässige Faser
- 23: lichtdurchlässiges Bauelement
- 24: Lichtausstrahlung an der Oberfläche des lichtleitenden Elements
- 25: Lichtausstrahlung an der Seitenfläche des lichtleitenden Elements
- 27: Rahmen
- 28.: Befestigungsvorrichtung
- 29: Grundplatte

## Patentansprüche

1. Verfahren zur kontinuierlichen Herstellung eines lichtdurchlässigen Bauelements, bei dem ein Faserverbund (9), der lichtdurchlässige Fasern (21) enthält, zuerst einer ersten Fördereinrichtung (5) vorgelegt wird, die den Faserverbund (9) kontinuierlich zu einer Beschichtungsvorrichtung (10) fördert, in der der Faserverbund (9) mit Gussmasse (3) kontinuierlich beschichtet wird, und bei dem mittels einer zweiten Fördereinrichtung (5) der beschichtete Faserverbund (13) kontinuierlich aus der Beschichtungsvorrichtung (10) heraus zu einer Schalungsform (12) gefördert wird, in der der mit Gussmasse (3) beschichtete Faserverbund (13) mäanderförmig abgelegt wird, und in der die den Faserverbund (13) ummantelnde Gussmasse (3) mit dem darin eingegossenem Faserverbund (13) zu einem lichtleitenden Gussblock aushärtet, der nach Ausschalung derart oberflächenbehandelt wird, dass die Querschnittsflächen der einzelnen lichtdurchlässigen Fasern (21) des Faserverbundes (13) freigelegt werden.

2. Verfahren nach Anspruch 1, bei dem der unbeschichtete Faserverbund (9) durch einen die Gussmasse (3) enthaltenden Behälter (2) hindurch geführt wird, und die von dem beschichteten Faserverbund (13) abtropfende Gussmasse (3) wieder in den Behälter (2) zurückläuft.

3. Verfahren nach Anspruch 1 oder 2, bei dem der ausgeschalte Gussblock in Stücke geschnitten wird, welche lichtdurchlässige Bauelemente (23) bilden, wobei die Außenflächen des lichtdurchlässigen Bauelements mit einer transparenten Schicht beschichtbar sind.

4. Vorrichtung zur Herstellung eines lichtdurchlässige Fasern (21) aufweisenden Bauelements (23), nach dem Verfahren gemäß einem der Ansprüche 1 bis 3, mit:
• einer Einrichtung zum Vorlegen eines Faserverbundes (9), der lichtdurchlässige Fasern (21) enthält,
• einer ersten Fördereinrichtung (5) zur kontinuierlichen Zuführung eines Faserverbundes (9) an eine Beschichtungsvorrichtung (10),
• einer Beschichtungsvorrichtung (10) zum kontinuierlichen Beschichten des Faserverbundes (9) mit Gussmasses (3),
• einer zweiten Fördereinrichtung (5) zum kontinuierlichen Fördern des beschichteten Faserverbundes (13) von der Beschichtungsvorrichtung (10) zu einer Schalungsform (12) und
• einer Einrichtung zur Erzeugung einer Relativbewegung zwischen der zweiten Fördereinrichtung (5) und einer Schalungsform (12) zum mäanderförmigen Ablegen des beschichteten Faserverbunds (13) und zum Aushärten der Gussmasse (3).

5. Vorrichtung nach Anspruch 4, bei der die Beschichtungsvorrichtung (10) in Längsrichtung oder in Breitenrichtung der Schalungsform (12) bewegbar ist und die Schalungsform (12) während des Befüllens mit beschichtetem Faserverbund (13) nicht-bewegbar ist oder die Beschichtungsvorrichtung (10) nicht bewegbar ist und die Schalungsform (12) während des Befüllens mit beschichtetem Faserverbund (13) in Längsrichtung oder in Breitenrichtung bewegbar ist.

6. Vorrichtung nach einem der Ansprüche 4 oder 5, mit einer Abstreifvorrichtung (8), die nach Herausfördern des mit Gussmasse (3) umgebenen Faserverbunds (13) aus der Beschichtungsvorrichtung (10) die an der zweiten Fördereinrichtung (5) anhaftende Gussmasse (3) entfernt und der Beschichtungsvorrichtung (10) wieder zuführt.

## Claims

1. Method for the continuous manufacture of a light-permeable construction element, in which method a fibre composite (9) which contains light-permeable fibres (21) is first fed to a first conveying unit (5) which continuously conveys the fibre composite (9) to a coating device (10) in which the fibre composite (9) is continuously coated with a pourable compound (3), and in which method by means of a second conveying unit (5) the coated fibre composite (13) is continuously conveyed out of the coating device (10) to a shaping mould (12), in which the fibre composite (13) coated with the pourable compound (3) is deposited in a meandering manner, and in which the pourable compound (3) enclosing the fibre composite (13), with the fibre composite (13) cast therein, is cured to form a light-conducting slab which, after demoulding, is surface treated in such a manner that the cross-sectional areas of the individual light-permeable fibres (21) of the fibre composite (13) are exposed.

2. Method according to Claim 1, in which the uncoated fibre composite (9) is routed through a container (2) containing the pourable compound (3), and the pourable compound (3) dripping from the coated fibre composite (13) runs back into the container (2).

3. Method according to Claim 1 or 2, in which the demoulded slab is cut into pieces which form light-permeable construction elements (23), wherein the outer faces of the light-permeable construction element are coatable with a transparent layer.

4. Device for the manufacture of a construction element (23) which displays light-permeable fibres (21), according to the method according to one of Claims 1 to 3, having:
- a unit for feeding a fibre composite (9) which contains light-permeable fibres (21),
- a first conveying unit (5) for continuously supplying a fibre composite (9) to a coating device (10),
- a coating device (10) for continuously coating the fibre composite (9) with a pourable compound (3),
- a second conveying unit (5) for continuously conveying the coated fibre composite (13) from the coating device (10) to a shaping mould (12), and
- a unit for producing a relative movement between the second conveying unit (5) and a shaping mould (12) for depositing the coated fibre composite (13) in a meandering manner and for curing the pourable compound (3).

5. Device according to Claim 4, in which the coating device (10) is movable in the longitudinal direction or in the direction of the width of the shaping mould (12) and the shaping mould (12) during filling with the coated fibre composite (13) is not movable, or the coating device (10) is not movable and the shaping mould (12) during filling with the coated fibre composite (13) is movable in the longitudinal direction or in the direction of the width.

6. Device according to one of Claims 4 or 5, having a stripping device (8) which, after the fibre composite (13) surrounded by the pourable compound (3) has been conveyed out of the coating device (10), removes the pourable compound (3) adhering to the second conveying unit (5) and resupplies said pourable compound (3) to the coating device (10).

## Revendications

1. Procédé pour la fabrication continue d'un élément structural transparent, dans lequel un composite de fibres (9), qui contient des fibres transparentes (21), est d'abord présenté à un premier dispositif de transport (5), qui transporte le composite de fibres (9) en continu à un dispositif de revêtement (10), dans lequel le composite de fibres (9) est revêtu en continu avec une masse d'enrobage (3), et dans lequel le composite de fibres revêtu (13) est transféré au moyen d'un deuxième dispositif de transport (5) du dispositif de revêtement (10) à un moule de coffrage (12), dans lequel le composite de fibres (13) revêtu de la masse d'enrobage (3) est déposé sous forme sinueuse, et dans lequel la masse d'enrobage (3) enrobant le composite de fibres (13) avec le composite de fibres (13) noyé à l'intérieur durcit en un bloc enrobé transmettant la lumière, qui après décoffrage est traité en surface de telle manière que les faces de section transversale des fibres transparentes individuelles (21) du composite de fibres (13) soient libérées.

2. Procédé selon la revendication 1, dans lequel le composite de fibres non revêtu (9) est conduit à travers un réservoir (2) contenant la masse d'enrobage (3), et la masse d'enrobage (3) s'égouttant du composite de fibres revêtu (13) retourne dans le réservoir (2).

3. Procédé selon la revendication 1 ou 2, dans lequel le bloc enrobé décoffré est découpé en morceaux, qui forment des éléments structuraux transparents (23), dans lequel les faces extérieures de l'élément structural transparent peuvent être revêtues d'une couche transparente.

4. Dispositif pour la fabrication d'un élément structural (23) présentant des fibres transparentes (21), par le procédé selon l'une quelconque des revendications 1 à 3, comportant:
• un dispositif pour présenter un composite de fibres (9), qui contient des fibres transparentes (21),
• un premier dispositif de transport (5) pour la fourniture continue d'un composite de fibres (9) à un dispositif de revêtement (10),
• un dispositif de revêtement (10) pour le revêtement continu du composite de fibres (9) avec une masse d'enrobage (3),
• un deuxième dispositif de transport (5) pour le transport continu du composite de fibres revêtu (13) du dispositif de revêtement (10) à un moule de coffrage (12), et
• un dispositif pour produire un mouvement relatif entre le deuxième dispositif de transport (5) et un moule de coffrage (12) pour le dépôt sinueux du composite de fibres revêtu (13) et pour le durcissement de la masse d'enrobage (3).

5. Dispositif selon la revendication 4, dans lequel le dispositif de revêtement (10) est déplaçable dans la direction de la longueur ou dans la direction de la largeur du moule de coffrage (12) et le moule de coffrage (12) n'est pas déplaçable pendant le remplissage avec le composite de fibres revêtu (13) ou le dispositif de revêtement (10) n'est pas déplaçable et le moule de coffrage (12) est déplaçable dans la direction de la longueur ou dans la direction de la largeur pendant le remplissage avec le composite de fibres revêtu (13).

6. Dispositif selon l'une des revendications 4 ou 5, avec un dispositif de raclage (8) qui, après l'extraction du composite de fibres (13) enrobé par la masse d'enrobage (3) hors du dispositif de revêtement (10), enlève la masse d'enrobage (3) adhérant au deuxième dispositif de transport (5) et la renvoie au dispositif de revêtement (10).
